Europäisches Patentamt

(19) European Patent Office

Office européen des brevets

(11) Publication number: **0 010 549**
**A1**

## (12) EUROPEAN PATENT APPLICATION

(21) Application number: **78101007.9**

(22) Date of filing: **27.09.78**

(51) Int. Cl.³: **G 05 D 23/19, F 24 H 9/20, H 05 B 1/02**

(43) Date of publication of application: **14.05.80**
**Bulletin 80/10**

(84) Designated Contracting States: **BE CH DE FR SE**

(71) Applicant: **Les Entreprises Corona Vista Ltée, Rural Route No 1 Rang No. 9, Mont-Rolland Quebec (CA)**

(72) Inventor: **Theoret, Adelard, 297 Rang St-Joseph, St-Thimotée Beauharnois Quebec, JOS 1XO (CA)**

(74) Representative: **Casalonga, Alain et al, Bureau D.A. Casalonga Lilienstrasse 77, D-8000 München 80 (DE)**

(54) **Electrical control circuit for a hot water furnace.**

(57) An electrical control circuit for a hot water furnace is disclosed. The control circuit comprises at least one main heating element (A; B) adapted for connection to a power source for heating water when circulated through the furnace, an additional heating element (C), also adapted for connection to the power source, and switch means (R3, R4, R5) for disconnecting the main heating element (A; B) when burnt out and connecting the additional heating element (C).

- 1 -

ELECTRICAL CONTROL CIRCUIT FOR A HOT WATER FURNACE

This invention relates to an electrical control circuit for a hot water furnace.

Electrical hot water furnaces have been known for a long time for heating private houses or apartments  However, they require the immediate attendance of an electrician when a heating element burns out ;  otherwise, the efficiency of the furnace is greatly reduced. This can be very costly when failure occurs at night or during week-ends, because of the overtime charges

It is the object of the present invention to provide a control circuit for an electrical hot water furnace, which permits connection of a spare heating element when a main heating element is burnt out, such spare heating element being preferably the heating element normally used to maintain the water in the furnace at a temperature between a low and high temperature limit when the furnace is not circulating hot water to the radiators of the house or apartment

The electrical control circuit, in accordance with the invention, comprises at least one main heating element adapted for connecting to a power source for heating water circulated through the furnace, an additional heating element also adapted for connection to the power source, and switch means for disconnecting the main heating element when burnt out and for connecting such additional heating element.

The electrical control circuit preferably comprises a first relay adapted for connection to the power source and having normally open contacts in series with the main heating element and normally closed contacts in series with the additional heating element.

The above mentioned switch means is preferably a manual switch connected in series with such first relay for de-energizing the first relay and thus disconnect the burnt heating element and connect the additional heating element

The electrical control circuit preferably comprises a secondary relay adapted for connection to the power source and having contacts in series with the additional heating element for energizing. the additional heating element to maintain the temperature of the water in the furnace at a predetermined temperature. The above-mentioned first and second relays are connected in series with high and low limit switches for controlling the temperature of the water in the furnace

The electrical control circuit also preferably comprises a transformer having its primary winding connected across the power source, a motorized valve connected across the secondary winding of the transformer in series with a thermostat controlling the temperature of a house or apartment, and third and fourth relays, also connected across the secondary winding of the transformer in series with a switch operated by said motorized valve. The third relay has normally closed contacts connected in series with the first and second relays for controlling de-energization of such relays The fourth relay has normally open contacts connected in series with a pump controlling the circulation of water through the furnace.

Manual reset switches are also preferably connected in series with the heating elements for disconnecting such elements in case of temperature overload

The invention will now be disclosed, by way of exemple, with reference to a preferred embodiment illustrated in the accompanying drawings, in which :

Figure 1 illustrates a perspective view of a hot water furnace using the electrical control circuit in accordance with the invention ;

Figure 2 illustrates a partly sectional view of the furnace of Figure 1 showing the heating elements in the furnace ; and

Figure 3 illustrates further control circuit for the hot water furnace.

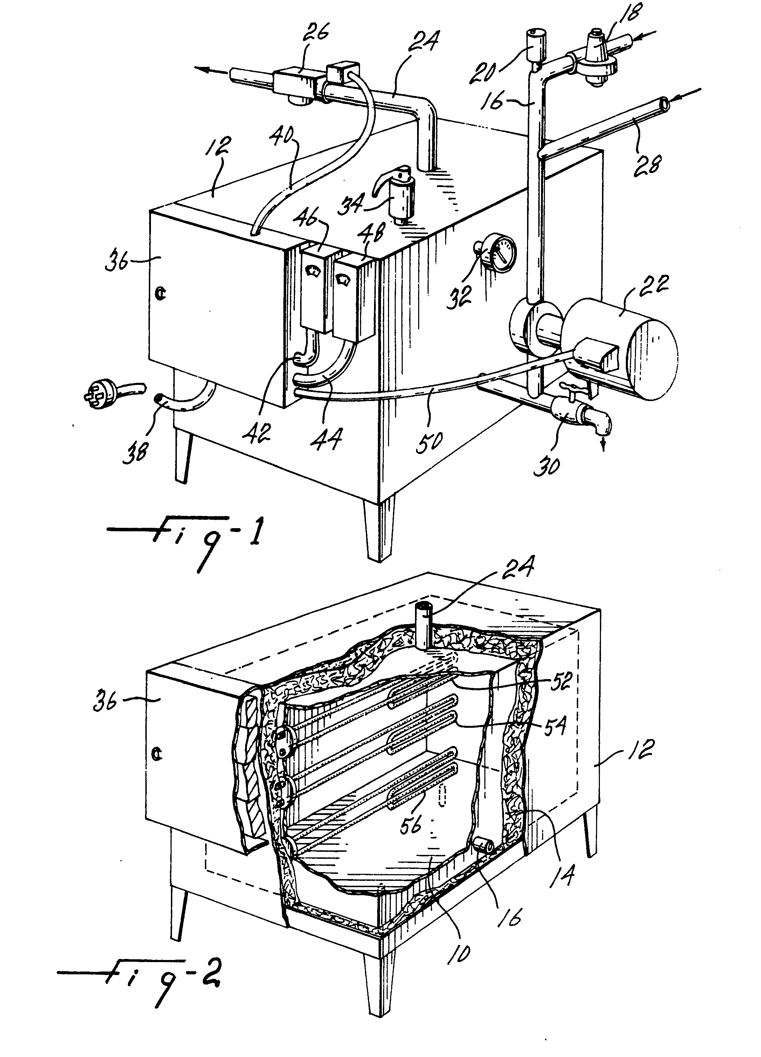

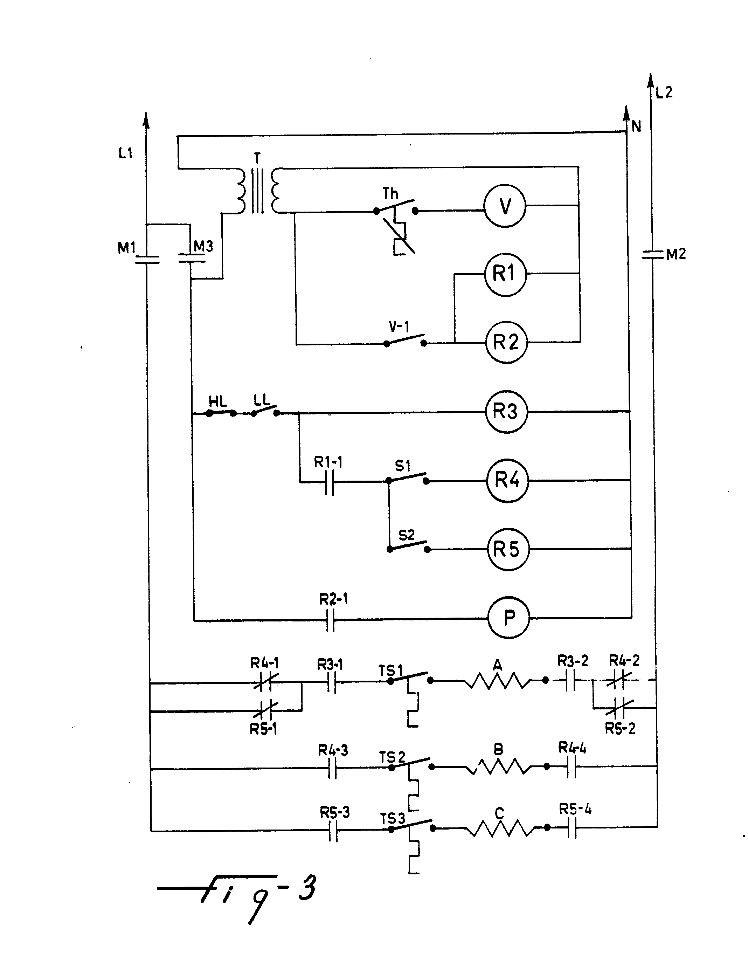

Referring to Figures 1 and 2 of the drawings, there is shown an electrical hot water furnace comprising an inner tank 10 and an outer envelope 12 separated by insulating material 14. Water is fed to the furnace by means of inlet pipe 16 through pressure-reducing valve 18 and air vent 20. A pump 22 is provided for circulating the water out of the furnace through outlet pipe 24 and motorized valve 26 and back into the furnace through return pipe 28. The furnace is further provided with a drain valve 30, a pressure gauge 32 and a pressure relief valve 34. The electrical control circuit is housed in control box 36 secured to the furnace and provided with a main line 38, secondary line 40 leading to motorized valve 26, secondary lines 42 and 44 leading to the high and low temperature limit regulators 46 and 48, respectively, and secondary lines 50 leading to pump 22. Heating elements 52, 54 and 56 are mounted on the furnace wall and have terminals extending within the control box 36

Referring to Figure 3, there is the electrical control circuit which is fed with 230 volts from lines L1 and L2 through main switches M1 and M2 and with 110 volts from lines L1 and N through switch M3. The primary winding of transformer T is connected across lines L1 and N. The secondary winding of transformer T is connected to a motorized valve V (valve 26 - Fig 1) through a thermostat Th controlling the temperature of the house or apartment. Relays R1 and R2 are also connected across the secondary of the transformer T in series with contacts V-1 of motorized valve V. Relays R3, R4 and R5 are also connected across lines L1 and N through high and low limit switches HL and LL. Switch HL opens when the temperature of the water in the furnace is above a predetermined value, while switch LL closes when the temperature of the water in the furnace is below a predetermined value. Relays R4 and R5 are connected in series with normally closed manual switches S1 and S2, respectively, and normally open contacts R1-1 of relay R1. Pump P is connected in series with contacts R2-1 of relay R2 across lines L1 and N.

Heating elements A, B, and C (52, 54 and 56 - Fig 1) are connected across lines L1 and L2. Heating element A is connected in series with normally open relay contacts R3-1 and R3-2 of relay R3 and a first parallel arrangement of normally closed contacts R4-2 and R5-2. Heating element B is connected in series with normally open contacts R4-3 and R4-4 of relay R4. Heating element C is connected in series with normally open contacts R5-3 and R5-4 of relay R5. Manually reset thermal switches TS1, TS2 and TS3 are connected in series with heating elements A, B and C respectively

The above disclosed control circuit operates as follows :

When the thermostat switch Th closes, calling for heat, motorized valve V is energized, closing contacts V-1 and operating relays R1 and R2. The operation of relay R1 energizes relays R4 and R5 through closed contacts R1-1 and normally closed switch S1 and S2 provided that temperature limit switches HL and LL are closed. The operation of relay R2 energizes pump P through now closed contacts R-1 to start circulation of water through the pipes in the radiators of the house or apartment. As soon as pump P is energized, cooler water is circulated through the furnace and this will automatically close low limit switch LL to energize relays R4 and R5, as mentioned previously.

The operation of relays R4 and R5 closes contacts R4-3, R4-4, R5-3 and R5-4 to energize main heating elements B and C. Thus, while the pump P is operated, heating elements B and C are energized to circulate hot water through the radiators of the house or apartment.

Relay R3 is energized when the temperature of the water in the furnace is lower than a low limit by closure of limit switch LL and de-energized by opening of limit switch HL when the temperature of the water exceeds a predetermined limit. The operation of relay R3 closes contacts R3-1 and R3-2 to energize heating element A provided that contacts R4-1 and R4-2, or R5-1 and R5-2 are closed. As mentioned previously, this does not happen unless relays R4 and R5 are de-energized by opening of contact R1-1 when heat is not called for. Thus, heating element A is never operated when the heating elements B and C are operated.

If one of the main heating elements B or C burns out, the building owner or attendant can easily localize the burnt heating element and open the switch S1 or S2 controlling the operation of relays R4 or R5. Depending on which one of switches S1 or S2 is opened, the de-energization of relays R4 and R5 will close their associated contacts R4-1 and R4-2 or R5-1 and R5-2 to energize heating element A. It will be understood that the burning of one of the regular heating elements will automatically lower the temperature of the water of the furnace and, thus, close the contacts R3-1 and R3-2 in series with heating element A. Thus, heating element A

5

will be energized to ·replace the burnt out element until an electrician is called in. No rush call will be needed, thus eliminating costly overtime charges.

Although the invention has been disclosed with reference to a preferred embodiment, it is to be understood that alternative embodiments are envisaged and that the invention is to be limited by the scope of the claims only.

0010549

CLAIMS

1. An electrical control circuit for a hot water furnace comprising :

a) at least one main heating element adapted for connection to a power source for heating water circulated through the furnace ;

b) an additional heating element also adapted for connection to said power source ; and

switch means for disconnecting said main heating element when burnt out and for connecting said additional heating element.

2. An electrical control circuit as defined in claim 1, further comprising a first relay adapted for connection to said power source and having normally open contacts in series with the main heating element and normally closed contacts in series with said additional heating element, and wherein said switch means is a manual switch connected in series with said first relay for de-energizing said first relay and, thus, disconnect the burnt heating element and connect the additional heating element.

3. An electrical control circuit as defined in claim 2, further comprising a second relay adapted for connection to said power source and having contacts in series with said additional heating element for energizing said additional heating element to maintain temperature of the water in the furnace at a predetermined temperature.

4. An electrical control circuit as defined in claim 3, further comprising high and low temperature limit switches connected in series with said first and second relays for controlling the temperature of the water in the furnace.

5. An electrical control circuit as defined in claim 3, further comprising a transformer having its primary winding connected across the power source, a motorized valve connected across the secondary winding of said transformer in series with a thermostat controlling the temperature of a house or apartment, and a third and a fourth relay, also connected across the secondary winding of the transformer in series with a switch operated by said motorized valve.

6. An electrical control circuit as defined in claim 5, wherein said third relay has normally closed contacts connected in series with said first relay for controlling the energization or de-energization of said first relay.

7. An electrical control circuit as defined in claim 5, wherein said fourth relay has normally open contacts connected in series with a pump controlling the circulation of water to the furnace.

8.An electrical control circuit as defined in claim 1, further comprising manual reset thermal switches connected in series with the heating elements for disconnecting the heating elements in case of a temporary overload.

Fig-1

Fig-2

Fig-3

European Patent Office

# EUROPEAN SEARCH REPORT

0010549
Application number

EP 78 101 007.9

| | DOCUMENTS CONSIDERED TO·BE RELEVANT | | CLASSIFICATION OF THE APPLICATION (Int. Cl.3) |
|---|---|---|---|
| Category | Citation of document with indication, where appropriate, of relevant passages | Relevant to claim | |
| | FR – A1 – 2 276 542 (A. SASSONE)<br>* page 2, lines 7 to 28; claims *<br>--<br>DE – A1 – 2 705 408 (BOSCH-SIEMENS HAUSGERÄTE GMBH)<br>* whole document *<br>--<br>SIEMENS-ZEITSCHRIFT, Vol. 43, No. 7, 1969<br>Erlangen<br>J. KUHN et al. "Digital-Vielfach-regelung mit Prozeßrechner"<br>pages 577 to 582<br>* page 581, right column to page 582 *<br>---- | 1<br><br>1,2<br><br><br>1 | G .05 D 23/19<br>F 24 H 9/20<br>H 05 B 1/02 |

**TECHNICAL FIELDS SEARCHED (Int.Cl.3)**

F 24 H 9/00
G 05 D 23/00
G 08 B 29/00
H 05 B 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| X | The present search report has been drawn up for all claims | | |
|---|---|---|---|
| Place of search<br>Berlin | Date of completion of the search<br>21-01-1980 | Examiner<br>BEYER | |

EPO Form 1503.1   06.78